# FASCICULE DE BREVET EUROPEEN

(11) **EP 2 008 426 B1**
(45) Date de publication et mention de la délivrance du brevet: **18.10.2017**
(21) Numéro de dépôt: 07731181.9
(22) Date de dépôt: 23.03.2007
(51) Int. Cl.: H04L 12/24, G06F 3/0481, H04L 29/06

(54) **PROCEDE DE CONFIGURATION DE DISPLETS POUR UNE PLATEFORME INTERACTIVE D'ANALYSE DE PERFORMANCE D'UN RESEAU INFORMATIQUE**
VERFAHREN ZUM KONFIGURIEREN VON DISPLETS FÜR EINE INTERAKTIVE PLATTFORM ZUM ANALYSIEREN EINER COMPUTERNETZ-LEISTUNGSFÄHIGKEIT
METHOD FOR CONFIGURING DISPLETS FOR AN INTERACTIVE PLATFORM FOR ANALYZING A COMPUTER NETWORK PERFORMANCE

(30) Priorité: 31.03.2006 FR 0602848
(43) Date de publication de la demande: 31.12.2008
(73) Titulaire: InfoVista SAS, 91940 Les Ulis (FR)
(72) Inventeur: ALLOT, Jean-François, F-91150 ETAMPES (FR)
(74) Mandataire: Pontet Allano & Associes
(86) Numéro de dépôt international: PCT/FR2007/000492
(87) Numéro de publication internationale: WO 2007/118956

(56) Documents cités:
- EP-A2- 0 957 424
- WO-A1-98/32076
- PARK J S ET AL: "Role-based access control on the Web" ACM TRANSACTIONS ON INFORMATION AND SYSTEMS SECURITY ACM USA, [Online] vol. 4, no. 1, février 2001 (2001-02), pages 37-71, XP001111120 ISSN: 1094-9224 Extrait de l'Internet: URL:http://www.list.gmu.edu/journals/tisse c/p37-park.pdf> [extrait le 2007-02-03]
- DAVE MCPHERSON: "Role-Based Access Control for Multi-tier Applications Using Authorization Manager" WINDOWS SERVER TECHCENTER, [Online] 31 juillet 2004 (2004-07-31), XP002418777 Extrait de l'Internet: URL:http://technet2.microsoft.com/WindowsS erver/en/library/72b55950-86cc-4c7f-8fbf-3 063276cd0b61033.mspx?pf=true> [extrait le 2007-02-05]

## Description

La présente invention se rapporte à un procédé pour configurer une plateforme interactive de surveillance de la performance et de la qualité d'un réseau informatique. Cette plateforme permet de communiquer à des utilisateurs un ensemble de des données de surveillance. Ces données sont affichées sur une page dynamique de type page Web sous forme de composants graphiques dits "displets". La plateforme informatique peut être considérée comme un portail Web.

D'une façon générale, cette plateforme informatique est un outil de gestion de niveau de service, autrement dit SLM pour "Service Level Management" en anglais, qui a un rôle de supervision de réseau informatique et de système d'information. La plateforme informatique mesure le niveau de qualité du système d'information et des éléments du réseau informatique auquel il est relié en détectant et diagnostiquant les problèmes. Elle génère ensuite des alertes par e-mail ou sous forme de rapports d'activités. Ces rapports peuvent être présentés à des utilisateurs sous forme de composants graphiques ou "displets". En fait, la plateforme informatique comprend un serveur de base de données accessibles selon une communication de type client-serveur. Les éléments du réseau peuvent comprendre des machines et/ou des applicatifs.

Plus concrètement, on conçoit pour un utilisateur ou un groupe d'utilisateurs, un portail comprenant un ensemble de pages contenant des displets. Le displet peut se présenter sous la forme d'une fenêtre graphique affichant des informations telles que des rapports, des icones de navigation ("navigation widgets), des courbes... Les displets peuvent interagir, permettant la réalisation d'applications interactives dans des pages Web, pour naviguer depuis des vues générales vers des données plus fines.

Une plateforme informatique de l'art antérieur offre des mécanismes de critères dans lesquels on filtre les données présentées en fonction de l'utilisateur final (opérations internes de maintenance, gestion d'entreprise ou client externe) : ces filtres agissent comme des "masques" appliqués lorsque l'on émet une requête de récupération de données depuis la base de données. Par exemple, un critère sur une propriété est souvent défini de telle sorte que le client "ACME" voit uniquement les données qui le concernent.

Les critères de filtrage ont donc pour rôle de rendre certaine données, c'est à dire certains displets, accessibles à des utilisateurs prédéterminés.

Cependant, les mécanismes de l'art antérieur consistant à configurer directement chaque displet de façon à définir les critères de filtrage qui lui sont applicables comportent des limitations importantes.

La première limitation est le manque de sécurité. Les mécanismes de critères de l'art antérieur sont principalement utilisés lors de la conception des vues initiales. Durant la navigation dans la fenêtre de visualisation, par synchronisation et zoom ("drilldown") de displets, de nouveaux critères de filtrage sont définis et utilisés dans des URLs qui sont soumises via un navigateur Web au serveur de la plateforme interactive afin d'obtenir la vue désirée. Une telle URL peut être facilement récupéré par un utilisateur final. Puis, en modifiant manuellement les paramètres de filtrage dans l'URL, cet utilisateur peut obtenir l'accès aux données pour d'autres machines ou éléments du système, déviant ainsi les critères existants de mécanismes.

La seconde limitation est le manque de factorisation. Les critères de filtrage doivent être définis pour chaque displet du portail. Cette limitation augmente le temps requis pour concevoir les pages du portail et conduit souvent à des erreurs, notamment si le concepteur oublie de définir des critères de filtrage appropriés sur tous les displets.

La présente invention a pour but un nouveau procédé de configuration simple à mettre en oeuvre et à utiliser, et présentant un niveau élevé de sécurité.

On atteint au moins l'un des objectifs avec un procédé pour configurer une plateforme interactive de surveillance de la performance et de la qualité d'un réseau informatique. Cette plateforme comporte une base de données client-serveur. La plateforme peut afficher des données de surveillance sous forme de composants graphiques dits "displets"sur une page dynamique de type page Web. Selon l'invention, la plateforme interactive comprend une interface de configuration dans laquelle on définit, pour au moins un utilisateur donné, des critères de filtrage pour l'affichage de displets, lesdits critères étant définis sous forme de paramètres de configuration des droits dudit au moins un utilisateur.

Selon une caractéristique avantageuse de l'invention, lesdits critère sont systématiquement activés par la plateforme interactive de façon à assurer un accès sécurisé des données.

Avec le procédé selon l'invention, on définit les critères de filtrage non pas au niveau de chaque displet comme dans l'art antérieur, mais directement au niveau des paramètres des utilisateurs. On paramètre les utilisateurs et non directement les displets. On nomme de tels critères de filtrage des critères partagés. Cela procure de nombreux avantages dont une sécurité garantie. En effet :
- les critères partagés sont appliqués à chaque fois des données doivent être retirées de la base de données;
- les définitions des critères partagés ne sont jamais présentées à l'utilisateur final, même dans les URLs échangées avec via un navigateur Web. Si un utilisateur essaye de changer des paramètres d'URLs transmises vers le serveur, l'utilisation systématique des critères partagés du côté du serveur empêche l'accès non autorisé aux données.

Avantageusement les critères partagés peuvent s'appliquer soit à l'ensemble des displets pour différentes pages soit à un groupe donné de displets. En d'autres termes, on configure bien les paramètres de l'utilisateur, mais ces paramètres concernent un groupe ou la totalité des displets.

Par ailleurs, la présente invention est notamment remarquable par le fait les critères partagés peuvent s'appliquer à un groupe d'utilisateurs ou à chaque utilisateur du groupe par héritage.

Selon l'invention, chaque groupe peut être organisé selon une arborescence à plusieurs niveaux. On peut alors définir des critères spécifiques pour un niveau donné de l'arborescence. Ces critères spécifiques peuvent être combinés avec les critères définis au niveau du groupe et reçus par héritage, ou bien ces critères spécifiques peuvent remplacer, pour ledit niveau donné, les critères définis au niveau du groupe.

Avec la présente invention, le travail de conception pour la restriction des données présentées à l'utilisateur final est grandement simplifié en factorisant les définitions des critères partagés à des niveaux utilisateur/groupe. Lorsqu'une définition de portail pré-conçue est déployée dans un environnement client, des critères de filtrage peuvent être appliqués aux niveaux supérieurs de la hiérarchie de groupe permettant d'affiner des données présentées tout en ne changeant pas la conception initiale du portail (et assurant ainsi une mise à jour douce de nouvelles conceptions).

La capacité de remplacer les critères partagés au niveau du displet permet la mise en oeuvre de cas spécifiques où des critères de filtrage communs ne peuvent pas être employés.

Selon l'invention, on restreint les droits d'un utilisateur donné à la définition et la visibilité de critères. Ceci permet ainsi de laisser à un utilisateur final l'accès à la configuration d'un displet, tout en garantissant, par le biais des critères partagés, qu'il ne pourra accéder qu'aux données autorisées.

En limitant les droits sur la définition et la visibilité des critères, de nouvelles possibilités de personnalisation peuvent être offertes à l'utilisateur, avec la garantie que seulement les données permises seront toujours visibles.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique de l'environnement de mise en oeuvre du procédé selon l'invention;
La figure 2 est une vue schématique d'une page Web affichant trois displets sous forme de composants graphiques;
La figure 3 est une vue schématique d'une fenêtre de configuration des paramètres utilisateurs.

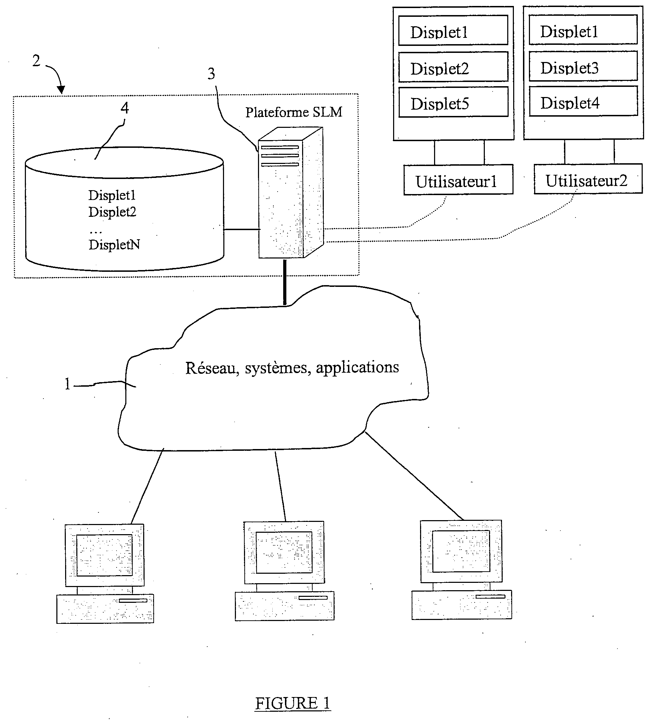

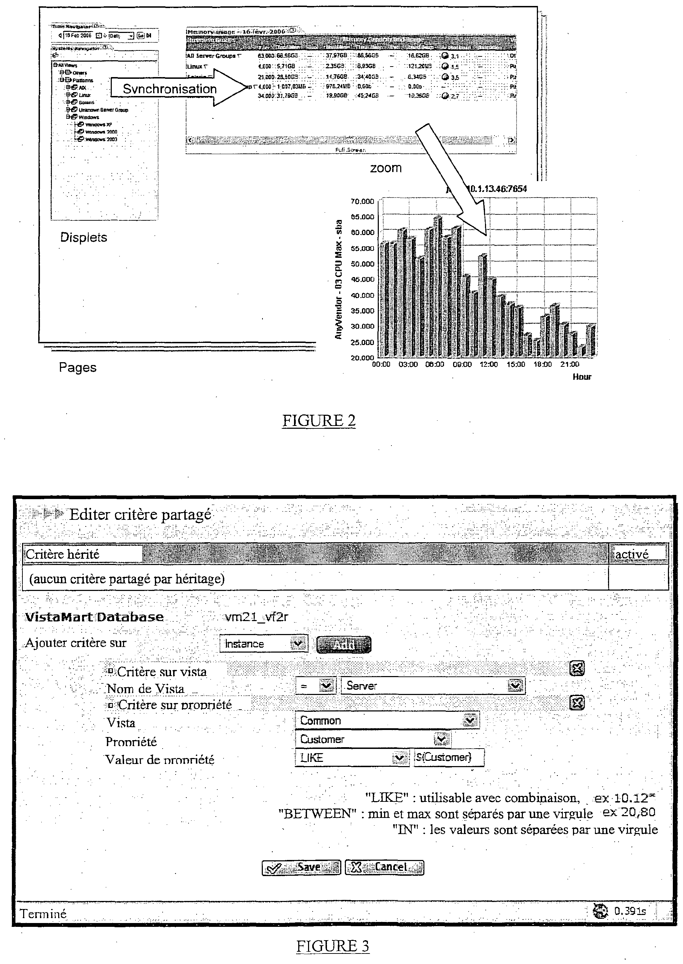

Sur la figure 1 on voit un réseau informatique 1 d'une entreprise. Ce réseau 1 comprend plusieurs machines, systèmes et applications actifs. Ces éléments sont sous surveillance par une plateforme 2 de gestion de niveau de service SLM qui scrute ("polling") le réseau 1 en permanence. Cette plateforme comprend un serveur 3 relié à une base de données 4. Les données de surveillance sont stockées dans la base de données 4 sous forme de displets ou composants renfermant chacun un type de données. Ces différentes données permettent l'analyse qualitative du réseau 1. Les utilisateurs finaux utilisateur1 et utilisateur2 peuvent accéder au serveur 3 via un navigateur Web. Chaque utilisateur n'est autorisé à visionner qu'un certain nombre de displets. L'utilisateur1 peut par exemple visualiser les displet1, displet2 et displet5. Alors que l'utilisateur2 peut visualiser les displet1, displet3 et displet4 sur une page Web. Une telle page Web est illustrée de façon schématique sur la figure 2. Le displet1 est un composant graphique sous forme de fenêtre de navigation dans des dossiers. Le displet2 est une fenêtre affichant l'utilisation et les capacités mémoires de différentes machines du réseau 1. On passe du displet1 au displet2 par synchronisation. Le displet5 est une fenêtre affichant le détail d'une des machines affichées sur le displet2. Ce détail consiste en une courbe graphique sous forme de barres représentant la charge CPU en fonction du temps de la machine concernée.

Pour que l'utilisateur1 ne puisse pas accéder à des displets non autorisés, ses droits d'accès sont définis dans le serveur 3 par un administrateur via une fenêtre de configuration comme on le voit sur la figure 3. Cette fenêtre de configuration permet de configurer les critères partagés selon l'invention pour des groupes et des utilisateurs. Pour la configuration, des variables utilisateur peuvent être employées comme paramètre de critères partagés, améliorant encore leur capacité à être réutilisé (les variables utilisateur peuvent être fournies par des scripts). Ces paramètres ou définitions sont sauvegardés dans la base de données de la plateforme et peuvent être déployés à d'autres portails en utilisant des mécanismes conventionnels d'import/export. Pour la mise en oeuvre, des routines chargent les critères partagés de chaque utilisateur, de son groupe, du groupe parent, etc.....

Lorsque le système est à implémenter dans une plateforme gérant déjà des critères de displets selon l'art antérieur. La hiérarchie complète d'héritage utilisateur/groupe peut être passée en revue afin d'établir une liste exhaustive de critères partagés pouvant être combinés avec des critères de displets existants. Cette liste est ensuite appliquée aux requêtes SQL transmises à la base de données de sorte que seules des données appropriées soient retournées à la plateforme interactive.

La présente invention définit donc un mécanisme de critère partagé procurant de nombreux avantages :
- un ensemble de critères de filtrage peut être défini une fois pour un portail complet d'un utilisateur et être ensuite utilisé par tous les displets des différentes pages de ce portail;
- les critères sont systématiquement utilisés par des composants du côté serveur à chaque requête vers la base de données, de façon à assurer un accès sécurisé aux données;
- ces critères partagés peuvent aussi être définis au niveau du groupe et ainsi être transmis par héritage à des utilisateurs appartenant à l'arborescence du groupe;
- à chaque niveau de la hiérarchie d'héritage : <des groupes parent> <utilisateur> <displet>, les critères de filtrage peuvent également être :
   o affinés en ajoutant de nouveaux critères de filtrage (combinés par un "ET" avec ceux hérités);
   o remplacés en définissant de nouveaux critères de filtrage spécifiques.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour accéder à des données de surveillance d'une plateforme interactive de surveillance de la performance et de la qualité d'un réseau informatique, ces données de surveillance étant aptes à être affichées sur une page dynamique de type page Web sous forme de composants graphiques dits "displets",
**caractérisé en ce que**, la plateforme interactive comprenant un serveur et une base de données dans laquelle les données de surveillance sont stockées sous forme de displets, on réalise les étapes suivantes lorsqu'un utilisateur accède au serveur au moyen d'un navigateur web :
- à chaque requête vers la base de données, on applique des critères de filtrage pour l'affichage de displets, lesdits critères étant définis dans le serveur sous forme de paramètres de configuration des droits dudit utilisateur, et
- on affiche que les displets autorisés à être visionnés par l'utilisateur.

2. Procédé selon la revendication 1, **caractérisé en ce que** lesdits critères sont systématiquement activés par la plateforme interactive de façon à assurer un accès sécurisé des données.

3. Procédé selon la revendication 1 ou 2, **caractérisé en ce que** lesdits critères s'appliquent à un groupe donné de displets.

4. Procédé selon la revendication 1 ou 2, **caractérisé en ce que** lesdits critères s'appliquent à l'ensemble des displets pour différentes pages.

5. Procédé selon l'une quelconque des revendications précédentes, **caractérisé en ce que** lesdits critères s'appliquent à un groupe d'utilisateurs.

6. Procédé selon la revendication 5, **caractérisé en ce que** les critères s'appliquent à chaque utilisateur du groupe par héritage.

7. Procédé selon la revendication 5 ou 6, **caractérisé en ce que** chaque groupe est organisé selon une arborescence à plusieurs niveaux, et **en ce qu'**on définit des critères spécifiques pour un niveau donné de l'arborescence.

8. Procédé selon la revendication 7, **caractérisé en ce que** lesdits critères spécifiques sont combinés avec les critères définis au niveau du groupe.

9. Procédé selon la revendication 7, **caractérisé en ce que** lesdits critères spécifiques remplacent, pour ledit niveau donné, les critères définis au niveau du groupe.

10. Procédé selon l'une quelconque des revendications précédentes, **caractérisé en ce qu'**on restreint les droits d'un utilisateur donné à la définition et la visibilité de critères.

## Patentansprüche

1. Verfahren zum Zugriff auf Kontrolldaten einer interaktiven Plattform zum Kontrollieren der Leistung und der Qualität eines Computernetzwerks, wobei diese Kontrolldaten dazu geeignet sind, auf einer dynamischen Seite vom Typ Website in Form von graphischen Komponenten, "Displets" genannt, angezeigt zu werden,
**dadurch gekennzeichnet, dass** die interaktive Plattform einen Server und eine Datenbank umfasst, in welcher die Kontrolldaten in Form von Displets abgelegt sind,
wobei dann, wenn ein Nutzer auf den Server mittels eines Webbrowsers zugreift, die nachfolgenden Schritte durchgeführt werden:
- bei jedem Abfragen der Datenbank werden Filterkriterien zum Anzeigen von Displets angewendet, wobei die Kriterien in dem Server in Form von Konfigurationsparametern zum Konfigurieren der Rechte des Nutzers definiert sind, und
- nur zum Ansehen durch den Nutzer zugelassende Displets angezeigt werden.

2. Verfahren nach Anspruch 1, **dadurch gekennzeichnet, dass** die Kriterien durch die interaktive Plattform systematisch aktiviert werden, so dass gesicherter Datenzugriff sichergestellt wird.

3. Verfahren nach Anspruch 1 oder 2, **dadurch gekennzeichnet, dass** die Kriterien bei einer vorgegebenen Gruppe von Displets Anwendung finden.

4. Verfahren nach Anspruch 1 oder 2, **dadurch gekennzeichnet, dass** die Kriterien bei den gesamten Displets für verschiedene Seiten Anwendung finden.

5. Verfahren nach einem der vorangehenden Ansprüche, **dadurch gekennzeichnet, dass** die Kriterien bei einer Gruppe von Nutzern Anwendung finden.

6. Verfahren nach Anspruch 5, **dadurch gekennzeichnet, dass** die Kriterien bei jedem Nutzer der Gruppe durch Vererbung Anwendung finden.

7. Verfahren nach Anspruch 5 oder 6, **dadurch gekennzeichnet, dass** jede Gruppe nach einer Baumstruktur mit mehreren Ebenen organisiert ist und dass für eine gegebene Ebene der Baumstruktur spezifische Kriterien definiert werden.

8. Verfahren nach Anspruch 7, **dadurch gekennzeichnet, dass** die spezifischen Kriterien mit den für die Ebene der Gruppe definierten Kriterien kombiniert werden.

9. Verfahren nach Anspruch 7, **dadurch gekennzeichnet, dass** die spezifischen Kriterien für die gegebene Ebene die für die Ebene der Gruppe definierten Kriterien ersetzen.

10. Verfahren nach einem der vorangehenden Ansprüche, **dadurch gekennzeichnet, dass** die Rechte eines gegebenen Nutzers auf die Definition und Sichtbarkeit von Kriterien beschränkt werden.

## Claims

1. Method for accessing monitoring data of an interactive platform for monitoring the performance and the quality of a computer network, the monitoring data being suitable to be displayed on a dynamic page of type webpage in a form of graphic components called "displets",
**characterized in that**, the interactive platform comprising a server and a database where the monitoring data are stored in the form of displets, following steps are performed when an user access a server via a web browser:
- for each request to the database, filtering criteria are applied to display the displets, said criteria being defined in the form of parameters for configuring the rights of said user, and
- only displets authorized to be viewed by the user are displayed.

2. Method according to claim 1, **characterized in that** said criteria are systematically activated by the interactive platform in order to ensure secure access to data.

3. Method according to claim 1 or 2, **characterized in that** said criteria are applied to a given group of displets.

4. Method according to claim 1 or 2, **characterized in that** said criteria are applied to the set of displets for different pages.

5. Method according to any one of the preceding claims, **characterized in that** said criteria are applied to a group of users.

6. Method according to claim 5, **characterized in that** the criteria are applied to each user of the group by inheritance.

7. Method according to claim 5 or 6, **characterized in that** each group is organized according to a multi-level tree structure, and **in that** specific criteria are defined for a given tree structure level.

8. Method according to claim 7, **characterized in that** said specific criteria are combined with the criteria defined at the group level.

9. Method according to claim 7, **characterized in that** said specific criteria replace, for said given level, the criteria defined at the group level.

10. Method according to any one of the preceding claims, **characterized in that** the rights of a given user are restricted to the definition and the visibility of criteria.
